(19) Europäisches Patentamt
European Patent Office
Office européen des brevets

(11) **EP 4 678 325 A1**

(12) **EUROPEAN PATENT APPLICATION**
published in accordance with Art. 153(4) EPC

(43) Date of publication:
**14.01.2026  Bulletin 2026/03**

(21) Application number: **24845179.1**

(22) Date of filing: **27.05.2024**

(51) International Patent Classification (IPC):
**B23K 20/12** (2006.01)

(52) Cooperative Patent Classification (CPC):
**B23K 20/12**

(86) International application number:
**PCT/JP2024/019444**

(87) International publication number:
**WO 2025/022797 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **26.07.2023  JP 2023121907**

(71) Applicant: **JFE Steel Corporation**
**Tokyo 100-0011 (JP)**

(72) Inventors:
• **TANIGUCHI Koichi**
**Tokyo 100-0011 (JP)**
• **TOMITA Kai**
**Tokyo 100-0011 (JP)**

(74) Representative: **Grünecker Patent- und Rechtsanwälte PartG mbB Leopoldstraße 4 80802 München (DE)**

(54) **FRICTION STIR WELDING METHOD, FRICTION STIR WELDING DEVICE, AND METHOD OF PRODUCING JOINED MEMBER**

(57)     A friction stir welding method is provided that makes it possible to stably obtain good joint properties at a joined portion even when high-melting-point steel sheets are used as material to be joined. A defined relationship is satisfied between a load on rotating tools and a separation distance of the rotating tools.

FIG. 1

EP 4 678 325 A1

**Description**

TECHNICAL FIELD

The present disclosure relates to a friction stir welding method, a friction stir welding device, and a method of producing a joined member.

BACKGROUND

In friction stir welding such as double-sided friction stir welding, material to be joined is joined as follows. A pair of rotating tools are disposed at the front side and back side of material to be joined consisting of at least two or more metal sheets. The rotating tools are then pressed against the front surface and the back surface of the material to be joined, and are moved in a joining direction while being rotated. This allows the metal sheets to be softened by the frictional heat between the rotating tools and the material to be joined, and the softened portion is then stirred by the rotating tools. Plastic flow is caused in the region of a join portion of the material to be joined, thereby joining the material to be joined. Hereinafter, a region where the material to be joined is butted or overlapped and not yet joined is referred to as an "unjoined portion", and a region that has been joined and integrated is referred to as a "joined portion".

As a technique related to such friction stir welding, for example, Patent Literature (PTL) 1 describes:

"A friction stir welding method wherein the dynamic friction coefficient between material of a rotating tool or material coated on a surface of the rotating tool and a steel sheet is 0.6 or less,

when a heated region is defined as a region in which a temperature TS, in °C, of a surface of the steel sheet heated by a heater provided in front of the rotating tool in a joining direction satisfies the following expression (1), a minimum distance between the heated region and the rotating tool is equal to or less than a diameter of a shoulder portion of the rotating tool,

an area of the heated region is equal to or smaller than an area of a maximum diameter portion of a pin of the rotating tool, and

65 % or more of the area of the heated region is located between a joining center line, which is a straight line on the surface of the steel sheet that passes through a rotation axis of the rotating tool and is parallel to the joining direction, and a straight line that is parallel to the joining center line and is spaced from the joining center line by a distance equal to a maximum radius of the pin of the rotating tool toward a retreating side.

$$TS \geq 0.8 \times T_{A1} \qquad ...(1)$$

$T_{A1}$ is the temperature represented by the following expression (2).

$$T_{A1} \text{ (°C)} = 723 - 10.7[\%Mn] - 16.9[\%Ni] + 29.1[\%Si] + 16.9[\%Cr] + 290[\%As] + 6.38[\%W] ...(2) \qquad (2)$$

The above [%M] is the content (mass%) of the M element in the steel sheet that is working material, and is set to 0 if no M element is contained."

PTL 2 describes:

"A double-sided friction stir welding method wherein a shoulder and a pin of a rotating tool share the same axis of rotation and are made of a material harder than a steel sheet,

a heated region is defined as a region on a surface side of the steel sheet that is heated by a heating device provided in front of one of the rotating tools in a joining direction, and, during heating,

friction stir welding is carried out controlling steel sheet surface temperature TP, in °C, in the heated region to satisfy expressions (1) to (3), and a gap G, in mm, between opposing shoulders and a thickness t, in mm, of the steel sheet satisfies expression (5).

In a range

$$-0.5 \times D \leq W < -0.1 \times D, \ 40 \leq TP \leq 1200 \qquad ...(1)$$

In a range

$$-0.1 \times D \le W \le 0.1 \times D, \; 100 \le TP \le 1200 \qquad \ldots(2)$$

In a range

$$0.1 \times D < W \le 0.5 \times D, \; 40 \le TP \le 1200 \qquad \ldots(3)$$

$$0.4 \times t \le G \le t \qquad \ldots(5)$$

Here, W, in mm, is a distance from a joining center line in a width direction of a joined portion,

D, in mm, is a diameter of the shoulder of the rotating tool,
G, in mm, is shoulder clearance, and
t, in mm, is the thickness of the steel sheet."

PTL 3 describes:

"An electrical steel strip friction stir welding method comprising: pressing rotating tools into an unjoined portion that is a butted portion or an overlapped portion between an end of a first electrical steel strip and an end of a second electrical steel strip from both sides of the unjoined portion while rotating the rotating tools in opposite directions; and joining the first electrical steel strip and the second electrical steel strip by moving the rotating tools in a joining direction, wherein
a diameter D, in mm, of shoulders of the rotating tools satisfies the relationship of the following expression (1), and
a rotation speed RS, in r/min, of the rotating tools, the diameter D, in mm, of the shoulders of the rotating tools, and a joining speed JS, in mm/min, expressed as $RS \times D^3/JS$, satisfy the relationship of the following expression (2).

$$4 \times TJ \le D \le 10 \times TJ \qquad \ldots(1)$$

$$200 \times TJ \le RS \times D^3/JS \le 2000 \times TJ \qquad \ldots(2)$$

Here, TJ is defined such that,

when the unjoined portion is the butted portion, TJ is an average value in mm of the thickness of the first electrical steel strip and the thickness of the second electrical steel strip, and
when the unjoined portion is the overlapped portion, TJ is the thickness in mm of the overlapped portion."

CITATION LIST

Patent Literature

PTL 1: WO 2018/070316 A1
PTL 2: JP 2020-124739 A
PTL 3: JP 2023-041556 A

SUMMARY

(Technical Problem)

In a conventional friction stir welding method such as described in PTL 1, when a high-melting-point steel sheet, for example, a steel sheet having a Si content of 2.0 mass% to 5.0 mass%, is used as material to be joined, joint properties of a joined portion may degrade. Therefore, there is currently a demand for improvement in this regard.
In view of the current circumstances, it would be helpful to provide a friction stir welding method that makes it possible to obtain stable and good joint properties of a joined portion even when a high-melting-point steel sheet is used as material to be joined (hereinafter also referred to as a friction stir welding method that provides excellent stability in joint properties of a joined portion). Further, it would be helpful to provide a friction stir welding device that can be suitably used in the friction stir welding method. Further, it would be helpful to provide a method of producing a joined member. Hereinafter, any numerical range expressed using "to" means a range that includes the numerical values before and after "to" as the lower limit value and the upper limit value, respectively.

(Solution to Problem)

The inventors conducted intensive studies to solve the technical problem outlined above. First, the inventors investigated causes of degradation of the joint properties of the joined portion when a high-melting-point steel sheet is used as the material to be joined in a conventional friction stir welding method. As a result, the inventors have made the following discovery. When a high-melting-point steel sheet is used as the material to be joined, the rotating tools are prone to wear and damage (hereinafter also referred to as "wear"). Wear of the rotating tools may cause insufficient heat input and poor plastic flow, resulting in degradation of joint properties of the joined portion.

Therefore, based on the above discovery, the inventors conducted further studies. As a result, the inventors have made the following discoveries.

- There is a correlation between the progress of wear of the rotating tools and load on the rotating tools during joining.
- By controlling a separation distance of the rotating tools to satisfy a defined relationship according to the load on the rotating tools, it is possible to obtain stable and good joint properties of the joined portion even when a high-melting-point steel sheet is used as the material to be joined.

The present disclosure is based on these discoveries and further studies.

Primary features of the present disclosure are as follows.

1. A friction stir welding method comprising: pressing an opposing pair of rotating tools against a front surface and a back surface of material to be joined, respectively; and moving the rotating tools in a joining direction while rotating the rotating tools, thereby joining the material to be joined, wherein

a load on the rotating tools and a separation distance of the rotating tools satisfy the following relationships:

- when

$$0.01 \leq dL < 0.10$$

$$dL \times 0.1 \leq dD \leq dL \times 1.0$$

- when

$$0.10 \leq dL < 0.30$$

$$dL \times 0.2 - 0.01 \leq dD \leq dL \times 1.2 - 0.02$$

- when

$$0.30 \leq dL < 0.70$$

$$dL \times 0.4 - 0.07 \leq dD \leq dL \times 1.4 - 0.08$$

where $dL = \Delta L/Lint$, Lint is an initial value of the load on the rotating tools, $\Delta L$ is a change in the load on the rotating tools from Lint,
$dD = \Delta D/Dint$, Dint is an initial value of the separation distance of the rotating tools, and $\Delta D$ is a change in the separation distance of the rotating tools from Dint.

2. The friction stir welding method according to 1, above, wherein the load on the rotating tools is a load value in an axial direction, a load value in the joining direction, or a torque value in a rotational direction of the rotating tools.

3. The friction stir welding method according to 1 or 2, above, wherein the friction stir welding is butt joining or lap joining.

4. A friction stir welding device used in the friction stir welding method according to any one of 1 to 3, above, the friction stir welding device comprising:

an opposing pair of rotating tools;

a measurement device configured to measure a load on the rotating tools;

a calculation device configured to calculate a control range of a separation distance of the rotating tools based on the expression according to 1, above, from the load on the rotating tools measured by the measurement device; and

a position adjusting mechanism configured to change a position of the rotating tools within the control range of the separation distance of the rotating tools calculated by the calculation device.

5. A method of producing a joined member, the method comprising joining material to be joined by the friction stir welding method according to any one of 1 to 3, above, to obtain the joined member.

(Advantageous Effect)

According to the present disclosure, even when high-melting-point steel sheets are used as the material to be joined, it is possible to avoid degradation of joint properties of a joined portion and to obtain stable, good joint properties of the joined portion. This makes it possible to stably produce high-quality joined members regardless of the type of material to be joined, and therefore the industrial value is extremely high.

BRIEF DESCRIPTION OF THE DRAWINGS

In the accompanying drawings:

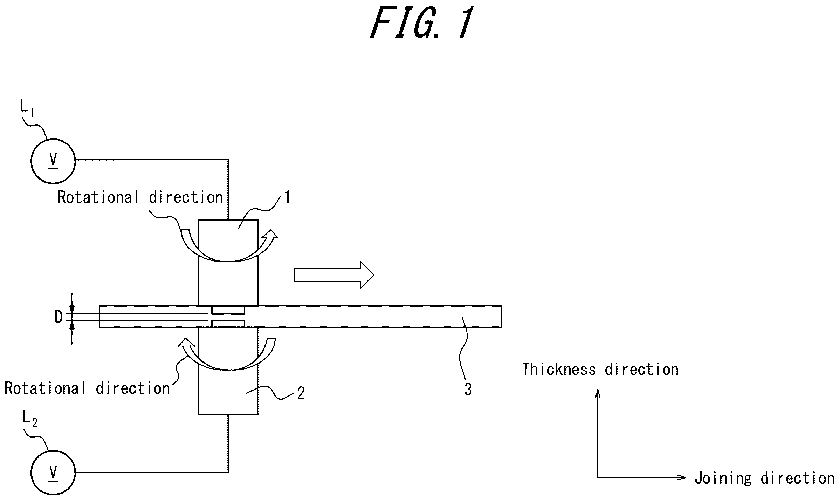

FIG. 1 is a schematic diagram illustrating an example of friction stir welding.

DETAILED DESCRIPTION

The following describes embodiments of the present disclosure.

Friction stir welding method

[1] First, a friction stir welding method according to an embodiment of the present disclosure is described.
As mentioned above, in friction stir welding according to an embodiment of the present disclosure, as illustrated in FIG. 1, a pair of rotating tools are disposed on a front side and a back side of material to be joined that includes at least two or more metal sheets. Hereinafter, a rotating tool disposed on the front side of the material to be joined is referred to as a front-side rotating tool. Further, a rotating tool disposed on the back side of the material to be joined is referred to as a back-side rotating tool. In FIG. 1, reference sign 1 denotes a rotating tool (front-side rotating tool), 2 denotes a rotating tool (back-side rotating tool), and 3 denotes material to be joined. The opposing pair of rotating tools are then pressed against the front surface and the back surface of the material to be joined, and are moved in a joining direction while being rotated. That is, the front-side rotating tool is pressed against the front surface of the material to be joined, and the back-side rotating tool is pressed against the back surface of the material to be joined, and these rotating tools are moved in the joining direction while being rotated. This allows the metal sheets to be softened by the frictional heat between the rotating tools and the material to be joined, and the softened portion is then stirred by the rotating tools. Plastic flow is caused in the region of a join portion of the material to be joined, thereby joining the material to be joined.
In the friction stir welding according to an embodiment of the present disclosure, it is extremely important to monitor a load on the rotating tools during welding and to control the separation distance of the rotating tools to satisfy the relationship in the following Expression (1) (consisting of three expressions divided into cases) according to the (monitored) load on the rotating tools.

• when

$$0.01 \leq dL < 0.10$$

$$dL \times 0.1 \leq dD \leq dL \times 1.0$$

- when

$$0.10 \le dL < 0.30$$

$$dL \times 0.2 - 0.01 \le dD \le dL \times 1.2 - 0.02 \qquad \ldots(1)$$

- when

$$0.30 \le dL < 0.70$$

$$dL \times 0.4 - 0.07 \le dD \le dL \times 1.4 - 0.08$$

Here, $dL = \Delta L/Lint$, Lint is an initial value of the load on the rotating tools, $\Delta L$ is a change in the load on the rotating tools from Lint, $dD = \Delta D/Dint$, Dint is an initial value of the separation distance of the rotating tools, and $\Delta D$ is a change in the separation distance of the rotating tools from Dint.

That is, when friction stir welding is carried out using a high-melting-point steel sheet as the material to be joined, the rotating tools are likely to sustain wear. Wear of the rotating tools may cause insufficient heat input and poor plastic flow, resulting in degradation of joint properties of the joined portion. In this regard, the separation distance of the rotating tools is controlled to satisfy the relationship of Expression (1) (consisting of three expressions divided into cases), and preferably to satisfy the relationship of the following Expression (2), depending on the load on the rotating tools during joining, which is correlated with the progress of wear of the rotating tools. This makes it possible to stably produce high-quality joined members regardless of the progress of wear of the rotating tools.

- when

$$0.01 \le dL < 0.10$$

$$dL \times 0.12 \le dD \le dL \times 0.9$$

- when

$$0.10 \le dL < 0.30$$

$$dL \times 0.24 - 0.012 \le dD \le dL \times 1.1 - 0.02 \qquad \ldots(2)$$

- when

$$0.30 \le dL < 0.70$$

$$dL \times 0.48 - 0.084 \le dD \le dL \times 1.3 - 0.08$$

When dL is less than 0.01, joining may be carried out keeping the separation distance of the rotating tools at Dint, that is, dD = 0. Further, in the initial stage of joining, the material to be joined that has undergone plastic flow may adhere to the rotating tools, increasing the load. In this case, too, joining may be carried out keeping the separation distance of the rotating tools at Dint, that is, dD = 0. When dL is 0.70 or more, replacing the rotating tools is recommended. Here, the separation distance D of the rotating tools is the separation distance (shortest distance) between the front-side rotating tool and the back-side rotating tool in the thickness direction of the material to be joined (hereinafter also referred to as the thickness direction), as illustrated in FIG. 1.

Further, Lint may be the load on the rotating tools when, for example, the rotating tools have not sustained wear, the separation distance of the rotating tools is set to an initial value (Dint), and joining is carried out under the same joining conditions as those in actual joining (those planned for actual joining). Lint can be determined, for example, by conducting a preliminary joining test in advance.

$\Delta L$ can be expressed as $\Delta L = Lint - LT$, where LT is the load on the rotating tools at time T. That is, $\Delta L$ can be said to be a decrease in the load on the rotating tools from Lint.

Dint may be determined based on the material to be joined and joining conditions planned for actual joining. For example, Dint is preferably $0.01 \times t$ to $0.5 \times t$. Dint is more preferably $0.05 \times t$ or more. Further, Dint is more preferably $0.3 \times t$ or less. Here, t is the thickness, in mm, of the material to be joined. Further, t is an average thickness of the material to be joined in the case of butt joining, and is the thickness of the overlapping portion of the material to be joined in the case of lap joining.

$\Delta D$ can be expressed as $\Delta D = Dint - DT$, where DT is the separation distance of the rotating tools at time T. That is, $\Delta D$ can be said to be the decrease in the separation distance of the rotating tools from Dint.

The load on the rotating tools is preferably, for example, a load value in an axial direction, a load value in the joining direction, or a torque value in a rotational direction of the rotating tools. The load value in the axial direction, the load value in the joining direction, and the torque value in the rotational direction of the rotating tools include values derived from these values (for example, a value in which the control range of dD according to Expression (1) is the same as that in a case where the load value in the axial direction, the load value in the joining direction, or the torque value in the rotational direction of the rotating tools is used). The load value in the axial direction, the load value in the joining direction, or the torque value in the rotational direction of the rotating tools can be measured using a typical load measurement device or torque measurement device.

In addition, when the load on the rotating tools differs between the front-side rotating tool and the back-side rotating tool, the relationship of Expression (1) (preferably Expression (2)) is satisfied for both the rotating tools.

Monitoring the load on the rotating tools means measuring the load on the rotating tools at defined intervals. The measurement interval is not particularly limited. The measurement interval is preferably set to, for example, 0.1 s to 1.0 s. The measurement interval may be constant and need not be constant.

The joining conditions other than those mentioned above are not particularly limited and may be in accordance with conventional methods. For example, the rotational speed of the rotating tools is preferably 300 rpm to 2000 rpm. Further, it is preferable that the rotational directions of the front-side rotating tool and the back-side rotating tool are opposite to each other. From the viewpoint of improving efficiency of construction, the joining speed is preferably 0.5 m/min or more. The joining speed is more preferably 0.8 m/min or more. The positions of the tips of the front-side rotating tool and the back-side rotating tool may be set appropriately in accordance with conventional methods so as to satisfy the relationship of Expression (1). For example, it is preferable that the positions of the tips of the front-side rotating tool and the back-side rotating tool are symmetrical in the thickness direction with respect to a center thickness position of the material to be joined.

Examples of joining methods include butt joining and lap joining. In butt joining, end faces of the material to be joined are disposed opposite each other, and the rotating tools are pressed against a butted portion that includes the end faces (butting faces) of the material to be joined while being rotated. In this state, the rotating tools are moved in the joining direction to join the material to be joined. In lap joining, at least a portion of end portions of the material to be joined is overlapped, and the rotating tools are pressed against the overlapped portion while being rotated. In this state, the rotating tools are moved in the joining direction to join the material to be joined.

The rotating tools used are not particularly limited. Typical rotating tools used in double-sided friction stir welding may be used. The tips of the rotating tools are preferably made of a material harder than the material to be joined.

The metal sheets used as the material to be joined are not particularly limited. A metal sheet used as the material to be joined is preferably a high-melting-point steel sheet having a melting point of 1350 °C or higher (in particular, a melting point of 1400 °C or higher), which is particularly susceptible to wear from the rotating tools, for example, a steel sheet having a Si content of 2.0 mass% to 5.0 mass%. Further, the chemical composition of such a steel sheet is, in mass%, C: 0.1 % or less, Si: 2.0 % to 5.0 %, Al: 2.0 % or less, and Mn: 1.0 % or less, with the balance being Fe and inevitable impurity. The inevitable impurity may be, for example, P: 0.2 % or less, S: 0.01 % or less, and N: 0.01 % or less. The chemical composition may optionally contain, in mass%, at least one selected from the group consisting of Cr: 1 % or less, Ni: 1 % or less, Cu: 1 % or less, Sn: 0.2 % or less, Sb: 0.2 % or less, Ca: 0.01 % or less, REM: 0.05 % or less, and Mg: 0.01 % or less. Elements other than Si and Fe may each be 0 mass%. The C content is more preferably 0.001 mass% or more. The Mn content and the Al content are each more preferably 0.01 mass% or more. Further, the metal sheets used for the material to be joined may be of the same steel grade or different steel grades. Further, the thickness of each metal sheet used for the material to be joined is preferably 0.2 mm to 3.2 mm.

[2] Friction stir welding device

The following describes a friction stir welding device according to an embodiment of the present disclosure.

The friction stir welding device according to an embodiment of the present disclosure is a friction stir welding device that can be suitably used in the friction stir welding method described under [1], above, and includes:

an opposing pair of rotating tools;
a measurement device configured to measure a load on the rotating tools;

a calculation device configured to calculate a control range of a separation distance of the rotating tools based on Expression (1), preferably Expression (2), from the load on the rotating tools measured by the measurement device; and

a position adjusting mechanism configured to change a position of the rotating tools within the control range of the separation distance of the rotating tools calculated by the calculation device.

The rotating tools are as described above.

The form of the measurement device is not particularly limited. Examples of the measurement device include a typical load measurement device or torque measurement device capable of measuring the load value in the axial direction, the load value in the joining direction, or the torque value in the rotational direction of the rotating tools. As the measurement device, a load measurement device or torque measurement device capable of monitoring (measuring at defined intervals) the load value in the axial direction, the load value in the joining direction, or the torque value in the rotational direction of the rotating tools is particularly suitable.

Examples of the calculation device include a device that has an input interface that inputs data such as various settings and the load of the rotating tools measured at defined intervals by a measurement device, an arithmetic section that processes the input data, a storage device that stores data and the like, and an output interface that outputs an operation signal to the position adjusting mechanism based on a processing result of the arithmetic section.

The form of the position adjusting mechanism is not particularly limited. The position adjusting mechanism may be, for example, an electric drive device that moves the rotating tools in the axial direction.

Other than the above, there are no particular limitations on device configuration and the like, and a device configuration equivalent to that of a conventionally known friction stir welding device may be used.

[3] Method of producing joined member

The following describes a method of producing a joined member according to an embodiment of the present disclosure.

The method of producing a joined member according to an embodiment of the present disclosure is joining material to be joined by the friction stir welding method, to obtain the joined member. Here, the joined member includes two or more base metals (material to be joined) and a joined portion of the base metals (a joined portion that joins the base metals). Each base metal is a metal sheet as material to be joined. The joined portion is the region that has undergone hot working due to frictional heat and plastic flow between the rotating tool and the material to be joined, resulting in a recrystallized microstructure. Conditions other than those described above are not particularly limited, and a conventional method may be used. The number of base metals joined at one joined portion may be two or more. The number of base metals joined at one joined portion may be, for example, two, or three to five.

EXAMPLES

In each case, two steel sheets as material to be joined, each having a melting point of 1450 °C (Si content: 4.0 mass%) and a thickness of 2 mm, were butted together and subjected to double-sided friction stir welding under the conditions listed in Table 1. In each case, the joining was carried out under the conditions until the dL of the rotating tools reached 0.70. The rotating tools (front-side rotating tool and back-side rotating tool) used were WC flat-tip tools under all conditions. Conditions not specified were in accordance with the above descriptions or a conventional method. In each case, the joining conditions were approximately the same for both sides, so Table 1 lists only one as a representative example. In addition, the appearance observation described below was carried out on both sides of the joined portion of the joined member.

Here, for Example No. 1, the friction stir welding device described under [2], above, was used. While monitoring the load on the rotating tools, the separation distance of the rotating tools was controlled in accordance with the load on the rotating tools so as to satisfy Expression (1), and joining was carried out. Further, Lint was the load of the rotating tools measured in a preliminary joining test. That is, in the preliminary joining test, when the rotating tools had not sustained wear, joining was carried out according to the joining conditions planned for actual joining with the separation distance of the rotating tools set to 0.400 mm, and the load on the rotating tools at that time was measured. On the other hand, for Comparative Example No. 2, joining was carried out with the separation distance of the rotating tools kept at Dint. Further, for Comparative Example No. 3, the separation distance of the rotating tools was appropriately changed outside the range of Expression (1), and joining was carried out. Conditions other than those mentioned above were in accordance with conventional methods. The load on the rotating tools was a load value in an axial direction of the rotating tools.

The joined portions of the joined members obtained were evaluated by appearance observation and for joint efficiency at each position where dL was 0.05, 0.09, 0.10, 0.20, 0.30, 0.50, and 0.69. The evaluation results are listed in Table 1. When the evaluation by appearance observation and for joint efficiency were "good" at all positions, it was determined that excellent stability of the joint properties of the joined portion was obtained.

In the appearance observation, the joined portion of the joined member was evaluated as "good" when no burrs or defects were visually observed at each position, and as "poor" when a burr or defect was observed.

In the evaluation of joint efficiency, joint efficiency (= fracture strength of joined portion / fracture strength of base metal × 100) of over 90 % was evaluated as "excellent", joint efficiency of 70 % or more and 90 % or less was evaluated as "good", and joint efficiency of less than 70 % was evaluated as "poor".

The fracture strength of the joined portion was measured as follows. Test pieces having the same shape as the No. 1 test piece specified in JIS Z 3121 (2013) were collected from each position of the joined portions of the joined members obtained so that the joining direction and thickness direction were perpendicular to the longitudinal direction of the test pieces and the joint was located centrally in the parallel portion. Next, a tensile test was carried out in accordance with JIS Z 3121 (2013) using the collected test pieces, and a maximum test force (N) was determined. The maximum test force (N) thus determined was divided by the cross-sectional area (mm$^2$) of the parallel portion of the test piece, and the value was taken as the fracture strength of the joined portion at each position.

Further, the fracture strength of the base metal may be referred to as the tensile strength (TS) of the base metal (material to be joined). That is, the fracture strength of the base metal may be measured by carrying out a tensile test in accordance with JIS Z 2241 (2022). For example, a JIS No. 5 test piece is collected from the base metal or the same material as the base metal. Next, a tensile test is carried out using the collected test piece at a crosshead speed of 10 mm/min to measure the tensile strength (TS). When the fracture strength differs depending on the base metal, a maximum fracture strength of each base metal was used in evaluating the joint efficiency.

[Table 1]

Table 1

| No. | Joining conditions | | | | | | Evaluation result | | Remarks |
|---|---|---|---|---|---|---|---|---|---|
| | dL | dD | Appropriate range of dD | Dint (mm) | ΔD (mm) | Expression evaluation | Appearance observation | Joint efficiency | |
| 1 | 0.05 | 0.025 | 0.005 ~ 0.050 | 0.400 | 0.010 | satisfied | good | excellent | Example |
| | 0.09 | 0.075 | 0.009 ~ 0.090 | 0.400 | 0.030 | satisfied | good | excellent | |
| | 0.10 | 0.025 | 0.010 ~ 0.100 | 0.400 | 0.010 | satisfied | good | excellent | |
| | 0.20 | 0.125 | 0.030 ~ 0.220 | 0.400 | 0.050 | satisfied | good | excellent | |
| | 0.30 | 0.125 | 0.050 ~ 0.340 | 0.400 | 0.050 | satisfied | good | excellent | |
| | 0.50 | 0.375 | 0.130 ~ 0.620 | 0.400 | 0.150 | satisfied | good | excellent | |
| | 0.69 | 0.525 | 0.206 ~ 0.886 | 0.400 | 0.210 | satisfied | good | excellent | |

(continued)

| No. | Joining conditions | | | | | | Evaluation result | | Remarks |
|---|---|---|---|---|---|---|---|---|---|
| | dL | dD | Appropriate range of dD | Dint (mm) | ΔD (mm) | Expression evaluation | Appearance observation | Joint efficiency | |
| 2 | 0.05 | 0.000 | 0.005 ~ 0.050 | 0.400 | 0.000 | unsatisfied | poor | poor | Comparative Example |
| | 0.09 | | 0.009 ~ 0.090 | 0.400 | | unsatisfied | poor | poor | |
| | 0.10 | | 0.010 ~ 0.100 | 0.400 | | unsatisfied | poor | poor | |
| | 0.20 | | 0.030 ~ 0.220 | 0.400 | | unsatisfied | poor | poor | |
| | 0.30 | | 0.050 ~ 0.340 | 0.400 | | unsatisfied | poor | poor | |
| | 0.50 | | 0.130 ~ 0.620 | 0.400 | | unsatisfied | poor | poor | |
| | 0.69 | | 0.206 ~ 0.886 | 0.400 | | unsatisfied | poor | poor | |
| 3 | 0.05 | 0.000 | 0.005 ~ 0.050 | 0.400 | 0.000 | unsatisfied | poor | poor | Comparative Example |
| | 0.09 | 0.250 | 0.009 ~ 0.090 | 0.400 | 0.100 | unsatisfied | poor | good | |
| | 0.10 | 0.250 | 0.010 ~ 0.100 | 0.400 | 0.100 | unsatisfied | poor | good | |
| | 0.20 | 0.010 | 0.030 ~ 0.220 | 0.400 | 0.004 | unsatisfied | poor | good | |
| | 0.30 | 0.500 | 0.050 ~ 0.340 | 0.400 | 0.200 | unsatisfied | poor | good | |
| | 0.50 | 1.000 | 0.130 ~ 0.620 | 0.400 | 0.400 | unsatisfied | poor | poor | |
| | 0.69 | 1.000 | 0.206 ~ 0.886 | 0.400 | 0.400 | unsatisfied | poor | poor | |

As indicated in Table 1, for the Example, the joined portions of the joined members obtained after joining were evaluated as good in appereance observation and joint efficiently at all positions where dL was 0.05, 0.09, 0.10, 0.20, 0.30, 0.50, and 0.69, and excellent stability of the joint properties of the joined portions was obtained. In contrast, for the Comparative Examples, at positions where dL was 0.05, 0.09, 0.10, 0.20, 0.30, 0.50, and 0.69, at least one of the appearance observation or the joint efficiency was evaluated as poor, and the desired stability of the joint properties of the joined portion was not obtained.

Further, when butt joining or lap joining was carried out using various high-melting-point steel sheets (various steel sheets having the above-described preferred chemical composition, a melting point of 1400 °C to 1530 °C, and a thickness of 0.2 mm to 3.2 mm) as the material to be joined, excellent stability of joint properties was obtained at the joined portion when the load on the rotating tools was controlled so as to satisfy Expression (1) using the load value in the axial direction, the load value in the joining direction, or the torque value in the rotational direction of the rotating tools.

REFERENCE SIGNS LIST

1     rotating tool (front-side rotating tool)
2     rotating tool (back-side rotating tool)

3    material to be joined

**Claims**

1.  A friction stir welding method comprising: pressing an opposing pair of rotating tools against a front surface and a back surface of material to be joined, respectively; and moving the rotating tools in a joining direction while rotating the rotating tools, thereby joining the material to be joined, wherein

    a load on the rotating tools and a separation distance of the rotating tools satisfy the following relationships:

    • when

    $$0.01 \leq dL < 0.10$$

    $$dL \times 0.1 \leq dD \leq dL \times 1.0$$

    • when

    $$0.10 \leq dL < 0.30$$

    $$dL \times 0.2 - 0.01 \leq dD \leq dL \times 1.2 - 0.02$$

    • when

    $$0.30 \leq dL < 0.70$$

    $$dL \times 0.4 - 0.07 \leq dD \leq dL \times 1.4 - 0.08$$

    where $dL = \Delta L/Lint$, Lint is an initial value of the load on the rotating tools, $\Delta L$ is a change in the load on the rotating tools from Lint,
    $dD = \Delta D/Dint$, Dint is an initial value of the separation distance of the rotating tools, and $\Delta D$ is a change in the separation distance of the rotating tools from Dint.

2.  The friction stir welding method according to claim 1, wherein the load on the rotating tools is a load value in an axial direction, a load value in the joining direction, or a torque value in a rotational direction of the rotating tools.

3.  The friction stir welding method according to claim 1, wherein the friction stir welding is butt joining or lap joining.

4.  The friction stir welding method according to claim 2, wherein the friction stir welding is butt joining or lap joining.

5.  A friction stir welding device used in the friction stir welding method according to any one of claims 1 to 4, the friction stir welding device comprising:

    an opposing pair of rotating tools;
    a measurement device configured to measure a load on the rotating tools;
    a calculation device configured to calculate a control range of a separation distance of the rotating tools based on the expression according to claim 1, from the load on the rotating tools measured by the measurement device; and
    a position adjusting mechanism configured to change a position of the rotating tools within the control range of the separation distance of the rotating tools calculated by the calculation device.

6.  A method of producing a joined member, the method comprising joining material to be joined by the friction stir welding method according to any one of claims 1 to 4, to obtain the joined member.

*FIG. 1*

L₁

V

Rotational direction

1

Rotational direction

L₂

V

D

2

3

Thickness direction

Joining direction

# EP 4 678 325 A1

## INTERNATIONAL SEARCH REPORT

| International application No. |
|---|
| **PCT/JP2024/019444** |

### A.  CLASSIFICATION OF SUBJECT MATTER

***B23K 20/12***(2006.01)i
FI:   B23K20/12 340

According to International Patent Classification (IPC) or to both national classification and IPC

### B.  FIELDS SEARCHED

Minimum documentation searched (classification system followed by classification symbols)

B23K20/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| A | WO 2011/024320 A1 (MITSUBISHI-HITACHI METALS MACHINERY, INC.) 03 March 2011 (2011-03-03)<br>entire text, all drawings | 1-6 |
| A | JP 2022-071403 A (HITACHI POWER SOLUTIONS CO., LTD.) 16 May 2022 (2022-05-16)<br>entire text, all drawings | 1-6 |
| A | WO 2019/054400 A1 (JFE STEEL CORPORATION) 21 March 2019 (2019-03-21)<br>entire text, all drawings | 1-6 |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/019444**

| Patent document cited in search report | | | Publication date (day/month/year) | Patent family member(s) | | | Publication date (day/month/year) |
|---|---|---|---|---|---|---|---|
| WO | 2011/024320 | A1 | 03 March 2011 | EP | 2474382 | A1 | |
| | | | | entire text, all drawings | | | |
| | | | | CN | 102481659 | A | |
| JP | 2022-071403 | A | 16 May 2022 | US | 2022/0126394 | A1 | |
| | | | | entire text, all drawings | | | |
| | | | | EP | 3991903 | A1 | |
| | | | | KR | 10-2022-0056798 | A | |
| | | | | CN | 114473173 | A | |
| WO | 2019/054400 | A1 | 21 March 2019 | US | 2020/0215644 | A1 | |
| | | | | entire text, all drawings | | | |
| | | | | EP | 3653329 | A1 | |
| | | | | KR | 10-2020-0028413 | A | |
| | | | | CN | 111050973 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018070316 A1
- JP 2020124739 A

- JP 2023041556 A